# FASCICULE DE BREVET EUROPEEN

(11) **EP 2 792 040 B1**
(45) Date de publication et mention de la délivrance du brevet: **01.05.2019**
(21) Numéro de dépôt: 12794722.4
(22) Date de dépôt: 03.12.2012
(51) Int. Cl.: H04M 11/06, H02H 1/04, H02H 9/04, H02H 9/06

(54) **PARAFOUDRE TRIPOLAIRE INTEGRE DANS UNE PASSERELLE RESIDENTIELLE AVEC DETECTEUR D'IMPACT DE FOUDRE**
IN EINEN RESIDENTIAL GATEWAY MIT BLITZEINSCHLAGDETEKTOR INTEGRIERTER DREIPOLIGER ÜBERSPANNUNGSABLEITER
THREE-POLE LIGHTNING ARRESTOR INTEGRATED INTO A RESIDENTIAL GATEWAY WITH LIGHTNING IMPACT DETECTOR

(30) Priorité: 12.12.2011 FR 1161484
(43) Date de publication de la demande: 22.10.2014
(73) Titulaire: Sagemcom Broadband SAS, 92500 Rueil-Malmaison (FR)
(72) Inventeur: DANGY-CAYE, Nicolas, F-92500 Rueil Malmaison (FR)
(74) Mandataire: Lavialle, Bruno François Stéphane
(86) Numéro de dépôt international: PCT/EP2012/074274
(87) Numéro de publication internationale: WO 2013/087443

(56) Documents cités:
- WO-A1-2004/006408
- WO-A1-2006/031158
- GB-A- 2 261 293
- GB-A- 2 421 860

## Description

L'invention concerne un appareil électronique équipé de moyens de protection contre une surtension due à la foudre.

### ARRIERE PLAN DE L'INVENTION

Des appareils électroniques de type « passerelle résidentielle » ou « modem », ou plus généralement, des appareils électroniques permettant de transférer des données entre une ligne téléphonique et un terminal quelconque comme un ordinateur, doivent être protégés contre des impacts de foudre pouvant survenir sur des éléments conducteurs de la ligne téléphonique.

Dans ce cadre, les recommandations ITU-T K.21 définissent des formes d'onde de référence représentatives d'impacts de foudre. Ces formes d'onde sont des impulsions d'amplitude maximale 1,5 kilovolt (kV) en mode commun pour l'onde dite « K.21 normal level », ou 6,0 kilovolt (kV) pour l'onde dite « K.21 enhanced level ».

La conception d'une protection contre la foudre consiste ainsi à prévoir des moyens permettant à l'appareil de supporter l'une ou l'autre de ces formes d'onde sans dommage.

En pratique, la conception d'une telle protection contre la foudre est compliquée dans le cas d'une passerelle destinée à être installée chez un particulier.

En effet, pour être efficace, une protection contre la foudre nécessite que la passerelle soit reliée à la terre. Hors, il n'est pas possible d'avoir l'assurance que l'utilisateur final va de façon effective connecter son appareil à la terre. En outre, la qualité de sa terre représente un aléa supplémentaire qui ne peut pas non plus être maîtrisé.

Une passerelle résidentielle est alimentée électriquement par un bloc secteur, lui-même connecté à un réseau électrique de type 230 Volt ou bien 110 Volt, et elle est par ailleurs connectée à une ligne DSL comportant typiquement deux éléments conducteurs.

Cette passerelle comporte notamment des composants internes dits frontaux (par exemple des composants de type AFE - Analog Front End) couplés à la ligne DSL et qui doivent être protégés de la foudre.

Lorsque la passerelle n'est pas reliée à la terre ou que la connexion est mauvaise, et qu'un impact de foudre survient, la masse électrique peut-être portée sensiblement au même potentiel que les éléments conducteurs de la ligne DSL, c'est-à-dire à un potentiel proche de celui de la surtension, soit, dans le cas d'une forme d'onde K.21 enhanced, à 6,0 kV.

Dans cette situation, les autres composants de la passerelle qui sont reliés à la masse sont soumis à un potentiel sensiblement égal à 6,0 kV. C'est notamment le cas des composants du port Ethernet d'une telle passerelle.

A l'heure actuelle, les composants d'un port Ethernet sont dimensionnés pour résister à des impulsions d'amplitude maximale 1,5 kV en mode commun (K.21 normal level). Ainsi, la surtension de 6,0 kV qui est imposée à la masse en cas de foudre, permet de protéger les composants frontaux de la passerelle, mais elle provoque malgré tout l'endommagement du port Ethernet si la passerelle n'est pas reliée à la terre.

WO 2006/031158 A1 décrit un circuit de protection contre les surtensions dans un système de communication analogique comprenant un ensemble de tubes à décharge qui sépare le transformateur, les câbles de la masse locale ou de la masse en un seul point, tant que la surtension n'est pas dépassée. WO 2004/006408 A1 divulgue un circuit de protection avec une unité de blocage des transitoires qui isole un point de connexion de sortie en réponse à des tensions transitoires destructives. Un tube à décharge dans le gaz conduit les courants transitoires des tensions à un point de référence de mise à la terre ou travers d'un condensateur.

### OBJET DE L'INVENTION

Le but de l'invention est de proposer une architecture permettant de protéger efficacement les composants d'un tel appareil des effets d'un impact de foudre sur la ligne à laquelle un tel appareil est connecté, y compris lorsque cet appareil n'est pas connecté à la terre.

### RESUME DE L'INVENTION

En vue de la réalisation de ce but, on propose un appareil électronique alimenté par un bloc d'alimentation connecté à un réseau électrique de type secteur, destiné à être connecté à une ligne de transmission comprenant deux éléments conducteurs et à un terminal pour transférer des données entre la ligne et le terminal, cet appareil comprenant :
- un composant frontal couplé à la ligne au travers d'un transformateur d'isolement;
- différents composants additionnels reliés à une masse électrique de l'appareil;
- un composant d'évacuation tel qu'un éclateur à gaz tripolaire, connecté aux éléments conducteurs de la ligne et qui devient passant en cas de surtension due à un foudroiement de la ligne, pour annuler cette surtension par établissement d'un courant circulant depuis la ligne vers la masse de manière à protéger les composants situés en aval de cette protection tels que le transformateur ou le composant frontal;
- un composant diviseur de type capacitif et/ou résistif interposé entre le composant d'évacuation et la masse électrique, pour constituer, avec le bloc d'alimentation et/ou un ou plusieurs des composants additionnels, un pont diviseur grâce auquel la tension imposée à la masse de l'appareil en cas de foudre est inférieure à la surtension subie par les éléments conducteurs de la ligne de manière à protéger également les composants additionnels.

Ainsi, lorsqu'un impact de foudre survient, les composants en aval sont protégés par l'éclateur tripolaire. Dans le cas où l'appareil électronique est relié à une terre électrique, le courant est évacué vers cette terre électrique. Dans le cas contraire, le composant diviseur constitue avec le bloc d'alimentation et/ou les composants additionnels un pont diviseur de tension qui permet de limiter la tension imposée à la masse électrique et donc aux bornes des composants additionnels de l'appareil qui sont exposés à la foudre par le fait qu'ils sont reliés à la masse électrique de l'appareil.

### BREVE DESCRIPTION DES DESSINS

Il sera fait référence aux figures des dessins annexés, parmi lesquelles :
- la figure 1 représente schématiquement un circuit électrique d'une passerelle résidentielle de l'invention ;
- les figures 2a et 2b représentent des schémas électriques équivalents capacitifs rapportés à un point commun C du circuit électrique de la passerelle de l'invention ;
- la figure 3 représente un schéma électrique équivalent capacitif rapporté au point commun C du circuit électrique de la passerelle de l'invention, lorsque la terre n'est pas connectée à la passerelle ;
- la figure 4 représente schématiquement un circuit électrique d'une passerelle résidentielle de l'invention qui comporte en outre deux capteurs de courant et une photodiode.

### DESCRIPTION DETAILLEE DE L'INVENTION

L'idée à la base de l'invention est de contrôler le niveau de tension subi par la masse électrique de l'équipement lors d'un impact de foudre par l'adjonction d'un composant diviseur sans compromis sur les performances de l'équipement en fonctionnement nominal. Ce composant diviseur permet de pondérer la répartition d'énergie, d'une part entre la ligne téléphonique et la masse électrique de l'équipement, et d'autre part, entre la masse de l'équipement et la terre.

Concrètement, on prévoit un point commun relié la masse électrique dans un pont diviseur dont les extrémités sont une électrode de terre d'un éclateur tripolaire et des composants électriques d'interface d'un bloc d'alimentation et de liaisons Ethernet. Le potentiel subi par la masse électrique correspond alors à la surtension générée par la foudre divisée par un certain facteur.

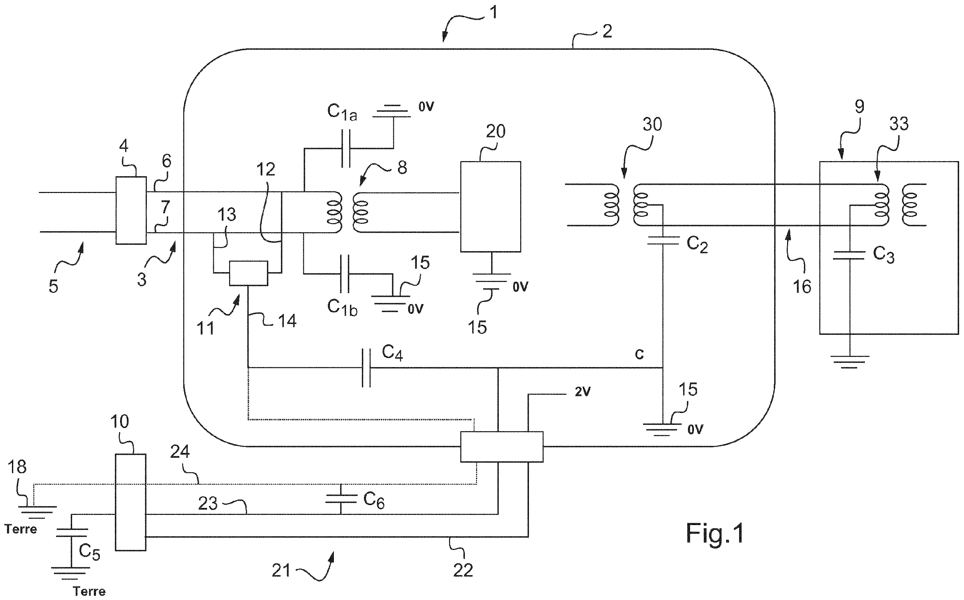

Une passerelle résidentielle 1 de l'invention, visible à la figure 1, comporte un circuit électrique 2 de l'invention, qui est connecté via une ligne DSL 3 et une prise téléphonique 4 à une ligne téléphonique 5. La ligne DSL 3 comporte deux éléments conducteurs 6, 7 transportant les données numériques.

La passerelle résidentielle 1 est aussi connectée à un boîtier décodeur 9, coopérant avec la passerelle résidentielle 1 par une ligne Ethernet 16.

Pour isoler galvaniquement la passerelle 1 et assurer les communications avec la ligne téléphonique 5 et la ligne Ethernet 16 en filtrant des bruits parasites, la passerelle 1 comprend :
- un transformateur d'isolement 8 et des condensateurs C₁ₐ et C_{1b} ;
- un transformateur d'isolement 30 et un condensateur C₂.

De même, pour isoler galvaniquement le boîtier décodeur 9 et assurer les communications avec la ligne Ethernet 16, le boîtier décodeur 9 comprend un transformateur d'isolement 33 et un condensateur C₃.

Le circuit électrique 2 de la passerelle résidentielle 1 est alimenté électriquement par un bloc secteur 10, lui-même connecté à un réseau de type 230 Volt ou bien 110 Volt. Un câble d'alimentation 21 relie la passerelle 1 et le bloc secteur 10. Ce câble d'alimentation comporte un élément conducteur d'alimentation 22 portant une tension d'alimentation, ici 12 V, et un élément conducteur de référence 23 portant une tension de 0V.

Un éclateur tripolaire 11, comportant deux électrodes de phase 12, 13 chacune connectée à un élément conducteur 6, 7 de la ligne DSL 3 et une électrode de terre 14 connectée à une masse électrique 15 au travers d'une capacité série C₄ de la passerelle, protège des composants électriques (20, 8) couplés à la ligne DSL 3 ainsi que des composants additionnels (30, C1, C2, C5) reliés à la masse électrique 15 des impacts de foudre survenant sur la ligne téléphonique 5.

On a aussi représenté un couplage capacitif de capacité C₅ au niveau du bloc secteur entre une terre électrique 18 et l'élément conducteur de référence 23.

Les capacités C₁ₐ, C_{1b}, C₂, C₃, C₄, C₅ forment un pont qui permet de diviser la tension imposée à la masse électrique 15 lorsqu'un impact de foudre survient sur la ligne téléphonique 15, et que la passerelle 1 n'est pas connectée à la terre électrique 18.

Pour chaque composant électrique, on peut définir une tension maximale Vmax, qui est la tension maximale que l'on peut appliquer aux bornes de ce composant sans qu'il soit endommagé.

Pour des applications du type de la passerelle 1 de l'invention, on peut choisir des composants ayant des tensions maximales telles que définies ci-après :
- des condensateurs C₁ₐ et C_{1b} dimensionnés pour la forme d'onde K21 enhanced level, c'est-à-dire qui ont une tension Vmax supérieure à 6,0 kV ;
- un transformateur 8 qui a une tension Vmax sensiblement égale à l'amplitude maximale de la forme d'onde K21 normal level, soit 6,0 kV ;
- des condensateurs C₂ et C₃ qui ont une tension Vmax légèrement supérieure à l'amplitude maximale de l'onde K.21 normal level, soit environ 2,0 kV ;
- des transformateurs d'isolement 30 et 33 de la liaison Ethernet qui ont une tension Vₘₐₓ proche de 8,0 kV.

Il est particulièrement intéressant de choisir la valeur de la capacité C₄ pour faire en sorte que, lorsqu'un impact de foudre survient créant une surtension maximale, c'est-à-dire, pour la passerelle 1, égale à l'amplitude maximale de la forme d'onde K21 enhanced level, la tension imposée à la masse électrique 15 soit divisée de sorte que la tension appliquée aux bornes des composants électriques reste inférieure à leur Vₘₐₓ.

Pour optimiser le choix de C₄, il est préférable de connaître le nombre d'équipements qui seront connectés à la passerelle 1. Mais la plupart du temps, l'utilisateur a la possibilité de choisir le nombre d'équipements qu'il souhaite connecter à la passerelle. Le dimensionnement de C₄ peut alors être réalisé en tenant compte du nombre maximum d'équipements connectés (égal par exemple au nombre de ports Ethernet présents sur la passerelle), ou bien en tenant compte du nombre d'équipements connectés le plus fréquemment (un ou deux équipement dans la pratique).

Pour illustrer l'invention, on choisira les valeurs suivantes pour C₁ₐ, C_{1b}, C₂, C₃, C₅ :
C₁ₐ = 45 picofarad (pf) ;
C_{1b} = 45 picofarad (pf) ;
C₂ = 1 nanofarad (nF);
C₃ = 1 nanofarad (nF);
C₅ = 1 nanofarad (nF).

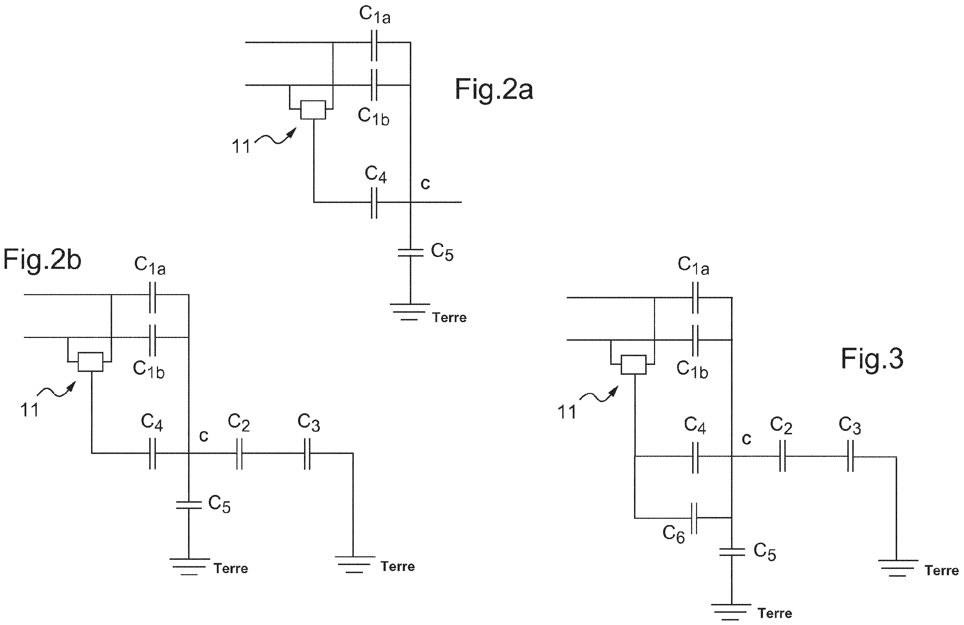

La figure 2a illustre le pont diviseur vu à un point commun C au potentiel de la masse électrique 15, lorsqu'aucun équipement n'est connecté à la passerelle 1 par liaison Ethernet (cela peut être le cas pour une passerelle adaptée à transmettre des données uniquement par liaison sans fil).

Pour optimiser le pont diviseur dans ce cas, on choisit C₄ = 910 pf, ce qui permet d'obtenir, lorsqu'un impact de foudre survient et que la passerelle n'est pas connectée à la terre, une tension au point C égale à la moitié de la surtension générée par la foudre.

Ainsi, alors que le transformateur 8 de la ligne DSL ne supporte qu'une Vₘₐₓ de 6,0 kV, il est possible de soumettre la passerelle à une surtension de 12,0 kV.

La figure 2b illustre le pont diviseur vu au point C lorsqu'un seul équipement, ici le boîtier décodeur 9, est connecté à la passerelle 1 par liaison Ethernet. On peut choisir de conserver C₄ = 910 pf, ou bien d'optimiser cette valeur pour une passerelle ayant un équipement connecté, dans le but de diminuer la surtension à la masse électrique pour qu'elle soit inférieure à la tension maximale Vₘₐₓ de C₂ et C₃.

Avantageusement, il est possible de choisir des composants C₂ et C₃ qui ont tous deux une tension maximale Vₘₐₓ, par exemple 6kV, supérieure à leur tension Vₘₐₓ habituelle, d'environ 2,0 kV. On choisira alors de préférence une tension maximale Vₘₐₓ identique pour les deux composants, car la tension aux bornes de C₂ et la tension aux bornes de C₃ sont sensiblement identiques en cas d'impact de foudre. Ainsi, on augmente la robustesse aux impacts de foudre d'un système composé de la passerelle et du boîtier décodeur en dimensionnant un seul composant par équipement. Le choix d'augmenter la tension maximale du composant C₂ seule est certes moins avantageux que le couple C₂ et C₃ mais permet d'assurer la robustesse de la passerelle seule.

Avantageusement, il est aussi possible de prévoir une connexion de la passerelle 1 à la terre électrique 18. Dans ce cas, lorsqu'un impact de foudre survient, le courant est directement évacué à la terre électrique 18, et la masse électrique 15 ne subit pas de surtension.

Deux agencements permettent de réaliser cette connexion :
- agencement dit « à deux conducteurs » : consiste à connecter l'élément conducteur de référence 23 à la terre électrique 18 au niveau du bloc secteur 10 ;
- agencement dit « à trois conducteurs »: consiste à ajouter au câble d'alimentation 21 un troisième élément conducteur 24 (représenté en pointillés à la figure 1) pour ramener la terre électrique 18 à la passerelle 1.

Dans l'agencement à deux conducteurs, si le réseau domestique ne comporte pas de terre électrique, ce qui est relativement courant, la configuration électrique revient à celle décrite plus haut en absence de terre électrique.

Dans l'agencement à trois conducteurs, la proximité du troisième élément conducteur 24 et de l'élément conducteur de référence 23 créé un couplage capacitif parasite de capacité parasite C₆.

La figure 3 illustre le pont diviseur vu au point C lorsque le boîtier décodeur 9 est connecté à la passerelle 1 par liaison Ethernet, et qu'une connexion à la terre est prévue selon l'agencement à trois conducteurs mais que l'installation ne comporte pas de terre. Il est important de tenir compte de la contribution de la capacité C₆ dans le dimensionnement du pont diviseur. Avantageusement, il est même possible de dimensionner le pont pour remplacer la capacité C₄ par la capacité C₆, ce qui permet d'économiser le coût d'un condensateur.

La valeur de capacité du condensateur C₄ a été choisie égale à 910 pf, mais l'invention prévoit bien sûr l'utilisation d'un condensateur C₄ de capacité différente, de préférence comprise entre 200 pf et 2 nf. En particulier, il est souhaitable d'optimiser cette valeur lorsqu'il est prévu de connecter à la passerelle plusieurs équipements (on choisira une valeur de capacité d'autant plus grande que le nombre d'équipements est élevé).

En outre, on a choisi d'illustrer l'invention avec un condensateur C₄, mais il est possible de monter à la place de ce condensateur plusieurs composants résistifs, ou capacitifs, ou capacitifs et résistifs.

Complémentairement, la passerelle selon l'invention est équipée de moyens lui permettant de compter et mémoriser le nombre d'impacts de foudres qu'elle a subi au cours de sa vie.

Cette information peut être ultérieurement utilisée par le service après-vente, l'opérateur téléphonique, ou autre pour intervenir sur la passerelle, ou bien la changer préventivement lorsqu'elle a subi un nombre d'impacts de foudre jugé trop important.

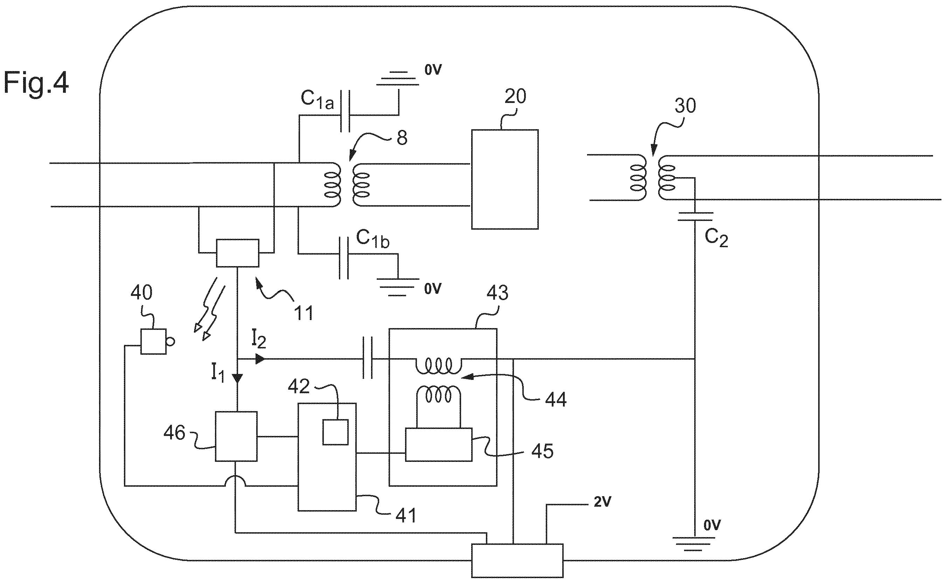

On représente à la figure 4 une photodiode 40 montée à proximité de l'éclateur 11, c'est-à-dire dans une région de la passerelle 1 dans laquelle l'arc lumineux créé par le passage du courant dans l'éclateur 11 survenant lorsque la ligne téléphonique 5 est foudroyée peut être détecté.

La photodiode 40 détecte les impacts de foudre et transmet une information indiquant qu'un impact a eu lieu à un processeur 41 muni d'une mémoire 42. Cette information pourra ensuite être lue par un technicien, soit en ouvrant la passerelle 1, soit en connectant un connecteur particulier à celle-ci.

Il est aussi possible de munir la passerelle 1 d'un capteur de courant 43 pour détecter un courant évacué lorsqu'un impact de foudre survient, ou bien pour obtenir une mesure de courant, utilisable notamment pour compter les impacts de foudre. Un tel capteur de courant 43 est illustré à la figure 4. Ce capteur 43 comprend un transformateur de courant 44 dont le primaire est connecté en série avec le condensateur C₄ de façon à créer dans le secondaire un courant image de celui, et des moyens d'acquisition 45 permettant de transformer le courant en une tension puis de mesurer cette tension. Bien sûr, ce capteur de courant peut parfaitement être un capteur de technologie différente, à effet Hall par exemple.

Dans le cas où une connexion à la terre selon l'agencement à deux conducteurs est prévu, il peut être intéressant de munir la passerelle de deux capteurs de courant 43, 46, un capteur 46 mesurant le courant I₁ qui est évacué par la terre lorsque la passerelle 1 est connectée à la terre, et un capteur 43 pour mesurer le courant I₂ pour mesurer le courant évacué par la masse électrique 15. En comparant les valeurs de I₁ et I₂ mesurées, il est possible de déduire un certain nombre d'informations qui seront ensuite mémorisées dans la mémoire 42. Ainsi, dans un mode particulier d'implémentation de l'invention :
- si I₁ ≈ 0 Ampère (A) et I₂ ≠ 0 A, on déduira que le réseau électrique ne comporte pas de terre, et on utilisera I₂ pour compter les impacts de foudre et pour estimer un niveau de l'impact;
- si I₁ ≠ 0 A et I₂ ≈ 0 A, on déduira que le réseau électrique comporte une terre, et on utilisera I₁ pour compter les impacts de foudre et pour estimer le niveau de l'impact ;
- si I₁ ≠ 0 A et I₂ ≠ 0 A, on déduira que le réseau électrique comporte une terre de mauvaise qualité, et on utilisera I₁ et I₂ pour compter les impacts de foudre, pour estimer le niveau de l'impact, et pour estimer une qualité de la connexion à la terre.

## Revendications

1. Appareil électronique (1) alimenté par un bloc d'alimentation (10) connecté à un réseau électrique de type secteur, destiné à être connecté à une ligne de transmission (5, 3) comprenant deux éléments conducteurs (6, 7) et à un terminal (9) pour transférer des données entre la ligne (5, 3) et le terminal (9), cet appareil comprenant :
- un composant frontal (20) couplé à la ligne au travers d'un transformateur d'isolement (8) ;
- différents composants additionnels (8, 30, C₁ₐ,C_{1b}, C₂, C₅) reliés à une masse électrique (15) de l'appareil (1) ;
- un composant d'évacuation (11) tel qu'un éclateur à gaz tripolaire, connecté aux éléments conducteurs (6, 7) de la ligne et qui devient passant en cas de surtension due à un foudroiement de la ligne (5, 3), pour annuler cette surtension par établissement d'un courant circulant depuis la ligne vers la masse (15) de manière à protéger les composants situés en aval de cette protection tels que le transformateur (8) ou le composant frontal (20);
- un composant diviseur de type capacitif et/ou résistif (C₄) interposé entre le composant d'évacuation (11) et la masse électrique (15), pour constituer, avec le bloc d'alimentation (10) et/ou un ou plusieurs des composants additionnels, un pont diviseur grâce auquel la tension imposée à la masse (15) de l'appareil en cas de foudre est inférieure à la surtension subie par les éléments conducteurs (6, 7) de la ligne de manière à protéger également les composants additionnels (8, 30, C₁ₐ, C_{1b}, C₂, C₅) ;

2. Appareil électronique selon la revendication 1, dans lequel le composant d'évacuation (11) est un éclateur à gaz tripolaire comportant deux électrodes de phase (12, 13) et une électrode de terre (14), les électrodes de phase (12, 13) étant connectées chacune à un élément conducteur (6, 7) de la ligne de transmission (5, 3) et l'électrode de terre (14) au composant diviseur (C₄).

3. Appareil électronique selon la revendication 2, dans lequel le composant diviseur (C₄) a une capacité comprise entre 0 et 2 nanofarads.

4. Appareil électronique selon l'une des revendications 1 à 3, connecté à une terre électrique du réseau électrique par un conducteur dédié du câble d'alimentation (21) reliant l'appareil électronique au bloc d'alimentation (10).

5. Appareil électronique selon l'une des revendications 1 à 4, comportant en outre des moyens de comptage d'impacts de foudre (40, 41, 43, 46).

6. Appareil électronique selon les revendications 2 et 5, dans lequel les moyens de comptage comprennent un photodétecteur (40) détectant un arc lumineux créé par l'éclateur (11) lors d'un foudroiement.

7. Appareil électronique selon l'une des revendications 5 à 6, dans lequel les moyens de comptage comprennent un capteur de courant (43, 46).

8. Appareil électronique selon la revendication 5, dans lequel l'appareil électronique (1) comporte en outre une ligne d'évacuation de courant vers la terre électrique (18) et dans lequel les moyens de comptage comprennent deux capteurs de courant (43, 46), un premier capteur de courant (43) étant monté en série avec le composant diviseur (C₄) et un second capteur (46) étant agencé pour mesurer le courant circulant dans la ligne d'évacuation vers la terre.

9. Appareil électronique selon l'une des revendications 5 à 8, comportant en outre un composant de mémorisation (42) pour mémoriser des données fournies par un détecteur de courant (43, 46).

10. Système comprenant un appareil électronique selon l'une des revendications 1 à 9 et un terminal (9), le terminal étant relié à l'appareil par une ligne de transmission (16) et comportant des composants additionnels (C3), **caractérisé en ce que** des composants (C2) parmi les composants additionnels de l'appareil électronique et des composants (C3) parmi les composants additionnels du terminal sont dimensionnés pour résister à un même niveau de surtension prédéterminé.

## Patentansprüche

1. Elektronisches Gerät (1), das von einem Netzteil (10) versorgt wird, das an ein Stromnetz vom Typ Versorgungsnetz angeschlossen ist, und das dazu bestimmt ist, an eine Übertragungsleitung (5, 3) angeschlossen zu werden, die zwei leitende Elemente (6, 7) umfasst, sowie an einen Terminal (9), um Daten zwischen der Leitung (5, 3) und dem Terminal (9) zu übertragen, wobei dieses Gerät umfasst:
- eine Front-Komponente (20), die an die Leitung über einen Isolationstransformator (8) gekoppelt ist;
- verschiedene zusätzliche Komponenten (8, 30, C₁ₐ, C_{1b}, C₂, C₅), die mit einer elektrischen Masse (15) des Geräts (1) verbunden sind;
- eine Entladungskomponente (11), wie z. B. eine dreipolige Gas-Funkenstrecke, die mit den leitenden Elementen (6, 7) der Leitung verbunden ist und im Falle einer Überspannung aufgrund eines Blitzeinschlags in der Leitung (5, 3) leitend wird, um diese Überspannung durch Erzeugen eines Stroms, der von der Leitung in Richtung der Masse (15) fließt, derart aufzuheben, dass die Komponenten, die sich stromabwärts dieses Schutzes befinden, wie der Transformator (8) oder die Front-Komponente (20), geschützt werden;
- eine Teilerkomponente (C₄) vom kapazitiven und/oder resistiven Typ, die zwischen der Entladungskomponente (11) und der elektrischen Masse (15) angeordnet ist, um mit dem Netzteil (10) und/oder einer oder mehreren zusätzlichen Komponenten eine Teilerbrücke zu bilden, dank der die an der Masse (15) des Geräts angelegte Spannung im Falle eines Blitzes niedriger als die Überspannung ist, der die leitendenden Elemente (6, 7) der Leitung ausgesetzt sind, sodass die zusätzlichen Komponenten (8, 30, C₁ₐ, C_{1b}, C₂, C₅) ebenfalls geschützt werden.

2. Elektronisches Gerät nach Anspruch 1, bei dem die Entladungskomponente (11) eine dreipolige Gas-Funkenstrecke ist, die zwei Phasenelektroden (12, 13) und eine Masseelektrode (14) umfasst, wobei die Phasenelektroden (12, 13) jeweils mit einem leitenden Element (6, 7) der Übertragungsleitung (5, 3) und die Masseelektrode (14) mit der Teilerkomponente (C₄) verbunden ist.

3. Elektronisches Gerät nach Anspruch 2, bei dem die Teilerkomponente (C₄) eine Kapazität zwischen 0 und 2 Nanofarad hat.

4. Elektronisches Gerät nach einem der Ansprüche 1 bis 3, das an einer elektrischen Masse des Stromnetzes über einen dedizierten Leiter des Versorgungskabels (21) angelegt ist, das das elektronische Gerät mit dem Versorgungsblock (10) verbindet.

5. Elektronisches Gerät nach einem der Ansprüche 1 bis 4, ferner umfassend Mittel (40, 41, 43, 46) zum Zählen der Blitzeinschläge.

6. Elektronisches Gerät nach den Ansprüchen 2 und 5, bei dem die Zählmittel einen Photodetektor (40) umfassen, der einen Lichtbogen erfasst, der von der Funkenstrecke (11) während eines Blitzeinschlags erzeugt wird.

7. Elektronisches Gerät nach einem der Ansprüche 5 bis 6, bei dem die Zählmittel einen Stromsensor (43, 46) umfassen.

8. Elektronisches Gerät nach Anspruch 5, bei dem das elektronische Gerät (1) ferner eine Entladungsleitung zum Entladen von Strom in Richtung elektrischer Masse (18) umfasst und bei dem die Zählmittel zwei Stromsensoren (43, 46) umfassen, wobei ein erster Stromsensor (43) in Reihe mit der Teilerkomponente (C₄) geschaltet ist und wobei ein zweiter Sensor (46) ausgebildet ist, um den Strom zu messen, der in der Entladungsleitung in Richtung Erde fließt.

9. Elektronisches Gerät nach einem der Ansprüche 5 bis 8, ferner umfassend eine Speicherkomponente (42) zum Speichern von Daten, die von einem Stromdetektor (43, 46) geliefert werden.

10. System, umfassend ein elektronisches Gerät nach einem der Ansprüche 1 bis 9, und einen Terminal (9), wobei der Terminal mit dem Gerät über eine Übertragungsleitung (16) verbunden ist und zusätzliche Komponenten (C3) umfasst, **dadurch gekennzeichnet, dass** Komponenten (C2) unter den zusätzlichen Komponenten des elektronischen Geräts und Komponenten (C3) unter den zusätzlichen Komponenten des Terminals so bemessen sind, dass sie demselben vorgegebenen Überspannungspegel widerstehen.

## Claims

1. An electronic appliance (1) powered by a power supply unit (10) connected to a mains type electricity network, and for connection to a transmission line (5, 3) having two conductor elements (6, 7), and to a terminal (9) in order to transfer data between the line (5, 3) and the terminal (9), the appliance comprising:
• a front-end component (20) connected to the line via an isolating transformer (8);
• various additional components (8, 30, C₁ₐ, C_{1b}, C₂, C₅) connected to an electrical ground (15) of the appliance (1) ;
• a discharge component (11) such as a three-pole gas discharger connected to the conductor elements (6, 7) of the line and that becomes conductive in the event of a voltage surge due to the line (5, 3) being struck by lightning, thereby eliminating the surge by establishing a flow of current from the line to electrical ground (15) so as to protect the components situated downstream of this protection, such as the transformer (8) or the front-end component (20); and
• a capacitive and/or resistive type divider component (C₄) interposed between the discharge component (11) and electrical ground (15) in order to co-operate with the power supply unit (10) and/or one or more additional components to constitute a divider bridge, whereby the voltage imposed on the electrical ground (15) of the appliance in the event of lightning is less than the surge to which the conductor elements (6, 7) of the line are subjected so as to provide protection also to the additional components (8, 30, C₁ₐ, C_{1b}, C₂, C₅).

2. An electronic appliance according to claim 1, wherein the discharge component (11) is a three-pole gas discharger having two phase electrodes (12, 13) and an earth ground electrode (14), each phase electrode (12, 13) being connected to a respective conductor element (6, 7) of the transmission line (5, 3), and the earth ground electrode (14) being connected to the divider component (C₄) .

3. An electronic appliance according to claim 2, wherein the divider component (C₄) has capacitance lying in the range 0 nF to 2 nF.

4. An electronic appliance according to any one of claims 1 to 3, connected to an earth ground of the electricity network by a dedicated conductor of the power supply cable (21) connecting the power supply unit (10) to the electronic appliance.

5. An electronic appliance according to any one of claims 1 to 4, further including counter means (40, 41, 43, 46) for counting lightning impacts.

6. An electronic appliance according to claims 2 and 5, wherein the counter means comprise a photodetector (40) detecting a luminous arc created by the discharger (11) during a lightning strike.

7. An electronic appliance according to claim 5 or claim 6, wherein the counter means include a current sensor (43, 46).

8. An electronic appliance according to claim 5, wherein the electronic appliance (1) further includes a line for discharging current to earth ground (18) and wherein the counter means include two current sensors (43, 46), a first current sensor (43) being connected in series with the divider component (C₄), and a second current sensor (46) being arranged to measure the current flowing in the discharge line to earth ground.

9. An electronic appliance according to any one of claims 5 to 8, further including a memory component (42) for storing data supplied by a current detector (43, 46).

10. A system comprising an electronic appliance according to any one of claims 1 to 9 and a terminal (9), the terminal being connected to the appliance by a transmission line (16) and including additional components (C₃), the system being **characterized in that** components (C₂) from among the additional components of the electronic appliance and components (C₃) from among the additional components of the terminal are dimensioned to withstand the same predetermined voltage surge level.
